# EUROPÄISCHE PATENTSCHRIFT

(11) **EP 1 903 648 B1**
(45) Veröffentlichungstag und Bekanntmachung des Hinweises auf die Patenterteilung: **03.07.2013**
(21) Anmeldenummer: 07116186.3
(22) Anmeldetag: 12.09.2007
(51) Int. Cl.: H02B 1/21

(54) **Verriegelungseinrichtung zur Verriegelung der Anordnung eines Adapters zur Befestigung eines elektrischen Gerätes**
Locking device for locking an adapter unit for mounting an electrical device
Dispositif de verrouillage pour le verrouillage de l'agencement d'un adaptateur pour la fixation d'un appareil électrique

(30) Priorität: 25.09.2006 DE 102006045190
(43) Veröffentlichungstag der Anmeldung: 26.03.2008
(73) Patentinhaber: Siemens Aktiengesellschaft, 80333 München (DE)
(72) Erfinder: Blaimer, Gerhard, 92245, Kümmersbruck (DE); Bruschke, Rolf-Eberhard, 01239, Dresden (DE); Hußmann, Jörg, 92318, Neumarkt (DE); Krall, Michael, 01069, Dresden (DE); Scudlo, Steffen, 91056, Erlangen (DE); Stang, Alfred, 92224, Amberg (DE)

(56) Entgegenhaltungen:
- DE-C1- 4 329 428
- DE-U1- 8 903 582
- DE-U1- 29 806 196

## Beschreibung

Die Erfindung betrifft eine Verriegelungseinrichtung zur Verriegelung der Anordnung eines Adapters zur Befestigung eines elektrischen Gerätes auf mindestens einer Stromschiene mit einem um eine Drehachse aus dem Adapter herausschwenkbaren Stufenteil, welches treppenartig angeordnete Stufen mit Stufenabsatzflächen zur verriegelnden Anlage an einer Unterseite der Stromschiene umfasst.

Bei der Befestigung von elektrischen Geräten in Schaltanlagen ist es üblich, dass die elektrischen Geräte mittels Adapter auf in den Schaltanlagen angeordneten Stromschienen aufgehangen beziehungsweise auf die Stromschienen aufgeschoben werden. Die Adapter weisen zu diesem Zweck Hakenelemente auf, die zur mechanischen Befestigung und elektrischen Kontaktierung auf die Stromschienen aufgeschoben werden. Auf Grund der Schwerkraft des Adapters und des an ihm befestigten elektrischen Gerätes hält sich der Adapter über seinen Haken auf der Stromschiene fest. Um ein unbeabsichtigtes beziehungsweise unbefugtes Abziehen des Adapters von der Stromschiene zu vermeiden, ist vorgesehen, dass die Position des Adapters auf der Stromschiene in seiner senkrechten Bewegungsrichtung, das heißt in Richtung quer zur Längserstreckungsrichtung der Stromschiene, verriegelt wird. Dabei besteht das Problem, dass je nach Anwendungsfall unterschiedliche Adapter zur Befestigung unterschiedlicher elektrischer Geräte auf Stromschienen aufgesetzt werden müssen, die unterschiedlich breite Kontakt-Anlageflächen aufweisen. Das heißt, dass die einzelnen Stromschienen unterschiedliche Abstände von der Oberkante, an der ein Hakenelement des Adapters aufzuhängen ist, bis zur gegenüberliegenden Unterkante aufweisen können. Eine Verriegelungseinrichtung des Adapters soll dabei eine Verriegelung des Adapters in seiner gewünschten Position unabhängig von der Breite der Kontaktfläche der Stromschiene gewährleisten.

### Zur Lösung dieses Problems offenbart das Dokument

DE 39 40 154 C1 ein Installationsgerät, in welchem ein Schieber translatorisch bewegbar angeordnet ist. Dieser Schieber weist an einer Seite Stufen auf. Bei Anlage des Installationsgerätes an die Kontaktfläche einer Stromschiene drückt diese entsprechend ihrer Breite auf eine bestimmte Stufe am Schieber und drückt damit den Schieber in einer translatorischen Bewegung so weit in das Installationsgerät hinein, bis die Ebene der Anlagestufe des Schiebers der Anlagefläche des Installationsgerätes an der Kontaktfläche der Stromschiene entspricht. Der Absatz der Stufe, die neben der Anlagestufe weiter aus dem Schieber herausragt, liegt somit an der Unterkante beziehungsweise Fläche der Stromschiene an, die der Kante gegenüberliegt, auf die ein Hakenelement des Installationsgerätes aufgeschoben ist.

Nachteilig an dieser Ausführungsform ist die relativ große bauliche Tiefe des Adapters, die zu einem hohen Volumenbedarf führt. Insbesondere in Schaltanlagen mit engen Einbauverhältnissen ist dies nachteilig. Des Weiteren besteht bei dieser Ausführungsform auf Grund der Größe und Vielzahl der sich relativ zueinander bewegenden Flächen die Gefahr der Verklemmung der beweglichen Teile bei längerer Lebensdauer und dabei zu erwartender Verschmutzung.

Eine weitere in der Praxis bereits verwendete Ausführungsform einer Verriegelungseinrichtung eines Adapters zur Befestigung eines elektrischen Gerätes auf einer Stromschiene weist einen um eine Drehachse kippbaren Riegel auf, der ebenfalls mit Stufen versehen ist. Der Stufenriegel ist mit der Kraft einer Feder beaufschlagt, die den Stufenbereich aus dem Adapter herauskippt. Je nach Breite der Stromschiene beziehungsweise ihrer Stromkontaktfläche legt sich diese an eine bestimmte Stufe des Riegels an, so dass die benachbarte, weiter herausstehende Stufe des Stufenteils an der Unterkante der Stromschiene anliegt, die der Kante, auf die der Haken des Adapters aufgehangen ist, gegenüberliegt. Somit ist auch in dieser Ausführungsform die Position des Adapters in Bezug auf die Befestigungshöhe an der Stromschiene fixiert beziehungsweise verriegelt. Die Drehachse des Stufenriegels, um die der Stufenriegel schwenkbar angeordnet ist, verläuft dabei parallel zu den jeweiligen Stufenabsatzflächen. Die Druckfeder zum Herausdrücken des Stufenriegels aus dem Adapter ist dabei in der durch den Stufenriegel aufgespannten Ebene angeordnet. Durch diese Anordnung der Druckfeder hinter dem Stufenriegel ergibt sich auch in dieser Ausführungsform eine relativ große Bautiefe und somit ein erhöhter Volumenbedarf des Adapters.

Der Erfindung liegt daher die Aufgabe zugrunde, eine Verriegelungseinrichtung zur Verriegelung einer Anordnung eines Adapters zur Befestigung eines elektrischen Gerätes auf mindestens einer Stromschiene zur Verfügung zu stellen, der einen einfachen Aufbau mit hoher Funktionssicherheit und geringer Bautiefe verbindet.

Diese Aufgabe wird erfindungsgemäß mit den im Anspruch 1 genannten Merkmalen gelöst. Vorteilhafte Ausgestaltungen sind in den Unteransprüchen angegeben. Das Dokument DE 298 06 196 offenbart eine Einrichtung gemäss dem Oberbegriff des Anspruchs 1.

Es wird eine Verriegelungseinrichtung zur Verriegelung der Anordnung eines Adapters zur Befestigung eines elektrischen Gerätes auf mindestens einer Stromschiene mit einem um eine Drehachse aus dem Adapter herausschwenkbaren Stufenteil zur Verfügung gestellt, wobei das Stufenteil treppenartig angeordnete Stufen mit Stufenabsatzflächen zur verriegelnden Anlage an einer Ober- beziehungsweise Unterseite der Stromschiene umfasst, und wobei die Drehachse des Stufenteils senkrecht zu den Stufenabsatzflächen verläuft und die Stufenabsatzflächen einen Ausschnitt aus einer abgestuften Spirale ergeben. Das heißt, dass die Stufen beziehungsweise deren Stufenabsatzflächen in Wendeltreppenform am Stufenteil angeordnet sind. Eine Stufenabsatzfläche ist dabei die Fläche, die an einer Unterseite der Stromschiene anliegt. Die Unterseite der Stromschiene ist dabei die Seite oder Fläche der Stromschiene, die der Seite der Aufhängung des Adapterhakens gegenüberliegt. Das heißt, eine Stufenabsatzfläche liegt nicht an der Kontaktfläche der Stromschiene an, an der die übrige Fläche des Adapters zur Befestigung des elektrischen Gerätes an der Stromschiene anliegt, sondern verläuft senkrecht zu dieser Fläche. Die Fläche der Stromschiene, die an der Stufenabsatzfläche des Stufenteils anliegt, verläuft senkrecht zur Kontaktfläche der Stromschiene und somit im Wesentlichen parallel zur Hakenauflagefläche. Bedingt durch die wendeltreppenartige Anordnung der einzelnen Stufen beziehungsweise Stufenabsatzflächen am Stufenteil verlaufen deren Begrenzungskanten damit in etwa strahlförmig zur Drehachse des Stufenteils. Die Drehbewegung um die Drehachse des Stufenteils erfolgt somit in etwa um die Längsachse der sich durch die Stufenanordnung ergebenden Spirale. Dadurch, dass die Drehachse seitlich einer jeden Stufe liegt und die Stufen sich nur teilweise überdecken, wird eine geringe Bautiefe des gesamten Stufenteils bewirkt.

Das Stufenteil ist in einer etwa rechteckigen Aussparung im Adapter angeordnet. Bei Anordnung einer Feder, deren Druckkraft das Stufenteil aus dem Adapter in Richtung der Stromschiene drückt, legt sich die Stromschiene entsprechend der Breite ihrer Kontaktfläche an eine bestimmte Stufe des Stufenteils derart an, dass sich das Stufenteil so weit in den Adapter beziehungsweise in dessen Aussparung hineinschiebt, bis die Stufe, an der die Kontaktfläche der Stromschiene anliegt, in einer Ebene mit der Anlagefläche des übrigen Adapters an der Stromschiene liegt. Das Einschieben des Stufenteils in die Aussparung im Adapter erfolgt dabei in einer Drehbewegung um die Drehachse des Stufenteils.

Eine neben der die Kontaktfläche der Stromschiene kontaktierenden Stufe angeordnete Stufenabsatzfläche steht dabei unter der Stromschiene an der Unterkante hervor, die der Kante gegenüberliegt, auf die der Haken des Adapters aufgeschoben ist. Die Stromschiene ist somit zwischen Adapterhaken und einer Stufenabsatzfläche eingeklemmt. Der Adapter kann nicht mehr in senkrechter Richtung, das heißt senkrecht zur Längserstreckungsrichtung der Stromschiene, von dieser abgenommen werden.

Es ist des Weiteren vorgesehen, dass alle Stufenabsatzflächen zur verriegelnden Anlage an einer Stromschiene parallel zueinander verlaufen.

Um mit der Erfindung eine optimale Bautiefenverringerung zu erreichen, ist vorgesehen, dass die Drehachse an einem seitlichen Rand des Stufenteils angeordnet ist. Das bedeutet, dass die Stufen beziehungsweise Stufenabsatzflächen im Wesentlichen sternförmig beziehungsweise um einen bestimmten geringen Betrag versetzt, zur Drehachse des Stufenteiles verlaufen.

Um eine sichere Anlage der Stufenabsatzflächen an der Anlagekante beziehungsweise Anlagefläche der Stromschiene zu erreichen, ist vorgesehen, dass die Stufenabsatzflächen an der der Drehachse abgewandten Seite eine größere Tiefe aufweisen als an der der Drehachse zugewandten Seite, das heißt, dass die Stufenabsatzflächen in der Regel keine parallelen Begrenzungskanten aufweisen.

Des Weiteren ist zur optimalen Anlage einer jeden Stufe beziehungsweise Stufenabsatzfläche an die Stromschiene vorgesehen, dass die Stufen bis auf die unterste Stufe derart versetzt zueinander angeordnet sind, dass eine untere Stufe auf ihrer der Drehachse zugewandten Seite seitlich neben der ihr benachbarten oberen Stufe einen Teilbereich der Stufenabsatzfläche aufweist. Das heißt, dass jede der Stufen (bis auf die unterste Stufe) an ihrer seitlichen, die Tiefe der Stufe an dieser Seite kennzeichnenden Kante, einen Absatz im Bezug auf die nächste Stufe aufweist. Bei Ausbildung des erfindungsgemäßen Stufenteils mit Stufen gleicher Breite bedeutet das, dass sich diese Absatzbildung auf der der Drehachse zugewandten Seite der Stufen ebenfalls auch auf der der Drehachse abgewandten Seite der Stufen ausbildet, wobei auf dieser Stufenseite die Absätze allerdings umgekehrt angeordnet sind, das heißt, dass auf dieser Seite eine obere Stufe eine untere Stufe seitlich überragt. Die gesamte der Drehachse abgewandte Seite des Stufenteils weist somit einen abgestuften Verlauf auf, der interpoliert eine Bogenform ergibt.

In einer besonderen Ausführungsform ist vorgesehen, dass die Stufenabsatzfläche der untersten Stufe zumindest einen Abschnitt mit parallelen Begrenzungskanten aufweist. Diese konstruktive Ausgestaltung ist insbesondere dafür vorgesehen, dass die bauliche Tiefe des im Adapter integrierten Stufenteils durch eine Abschrägung der Ecke der untersten Stufe verringert wird.

Des Weiteren kann vorgesehen sein, dass die unterste Stufe eine seitliche Begrenzungskante aufweist, die der Drehachse abgewandt ist, wobei diese seitliche Begrenzungskante abgerundet ist. Diese Ausgestaltung dient der Verminderung von Reibkräften bei der Montage des Adapters auf der Stromschiene.

Zum Herausschwenken des Stufenteils aus der Aussparung im Adapter ist vorgesehen, dass die Verriegelungseinrichtung des Weiteren einen federkraftbeaufschlagten Kipphebel umfasst, der derart angeordnet ist, dass eines seiner Enden am Stufenteil angreift. Der federkraftbeaufschlagte Kipphebel kann somit ein Moment beziehungsweise eine Bewegung auf das Stufenteil übertragen.

Vorteilhafterweise verläuft dabei die Längsachse des Kipphebels im Wesentlichen parallel zur Drehachse des Stufenteils.

Konstruktiv ist dabei der Kipphebel derart ausgestaltet, dass an dem Ende, welches dem am Stufenteil angreifenden Ende gegenüberliegt, eine Aufnahmeeinrichtung für eine Spiral-Druckfeder angeordnet ist, und dass die Drehachse des Kipphebels zwischen seinen beiden Enden liegt. Die Aufnahmeeinrichtung für die Spiral-Druckfeder kann zum Beispiel ein topfartig gestaltetes Element sein, in welchem die Spiral-Druckfeder einsetzbar ist, oder ein zylinderförmiges Element, welches in ein Ende der Spiral-Druckfeder einschiebbar ist. Das dem Befestigungsende am Kipphebel gegenüberliegende Ende der Spiral-Druckfeder stützt sich am Adapter ab. Damit bewirkt die Spiral-Druckfeder eine Kraft auf den Kipphebel, welche dieser in ein Drehmoment umwandelt und dieses über sein am Stufenteil angreifendes Ende derart auf das Stufenteil überträgt, dass er das Stufenteil aus der Aussparung am Adapter in Richtung der Stromschiene herausschwenkt.

Um die Kraft- beziehungsweise Bewegungsübertragung des Kipphebels auf das Stufenteil zu erreichen, ist der Kipphebel derart ausgestaltet, dass er an dem am Stufenteil angreifenden Kipphebelende eine Kugel aufweist, welche in eine Ausnehmung im Stufenteil eingreift. Die Kugel am Kipphebelende und die Ausnehmung im Stufenteil sind dabei derart dimensioniert, dass sich die Kugel relativ frei in der Ausnehmung bewegen kann. Diese relativ großzügig gestaltete Ausnehmung ermöglicht dadurch ein Eingreifen der Kugel in der Aussparung auch dann, wenn das Stufenteil beziehungsweise der Kipphebel in jeweils Winkelendpositionen angeordnet sind.

Vorteilhafterweise ist das Stufenteil im Adapter drehbar eingerastet. Diese konstruktive Ausgestaltung kann zum Beispiel dadurch erreicht werden, dass das Stufenteil an seinem oberen und unteren Ende auf einer Drehachse liegende Wellenzapfen aufweist, welche in am Adapter vorgesehene Einrastelemente eingeklemmt beziehungsweise eingerastet werden können, so dass das Stufenteil in der Aussparung im Adapter drehbar ist. Zur Fertigungsvereinfachung und Erleichterung der Montage ist vorgesehen, dass ebenfalls der Kipphebel im Adapter drehbar eingerastet ist. In ähnlicher Weise wie die Anordnung des Stufenteils weist auch der Kipphebel auf seiner Drehachse befindliche Zapfenelemente auf, die in Einrasteinrichtungen im Adapter eingerastet werden können. Auch in dieser Ausgestaltung ist der Kipphebel somit drehbar am Adapter angeordnet.

Um ein unbegrenztes Einschwenken des Stufenteils in die Aussparung im Adapter zu vermeiden, ist vorgesehen, dass am Adapter auf der den Stufen des Stufenteils abgewandten Seite mindestens ein Anschlagselement zur Drehbewegungsbegrenzung des Stufenteils angeordnet ist.

Die Erfindung wird anhand der nachfolgenden Zeichnungen beschrieben. Es zeigen dabei:
- FIG 1 und 2: perspektivische Ansichten des Stufenteils;
- FIG 3: Darstellung des Adapters im auf Stromschienen aufgehangenen Zustand in Verriegelung;
- FIG 4: ein zur Verriegelung an einer Stromschiene anliegendes Stufenteil;
- FIG 5 bis 7: perspektivische Ansichten eines im Adapter angeordneten Stufenteils;
- FIG 8 bis 10: Rückseite eines Adapters mit daran angebrachtem Stufenteil und Kipphebel;
- FIG 11 und 12: perspektivische Ansicht eines Stufenteils mit Darstellung der Drehzapfen und der Ausnehmung;
- FIG 13 und 14: perspektivische Ansichten des Kipphebels;
- FIG 15: perspektivische Ansicht der Aussparung im Adapter und der Einrasteinrichtungen für den Kipphebel und das Stufenteil.

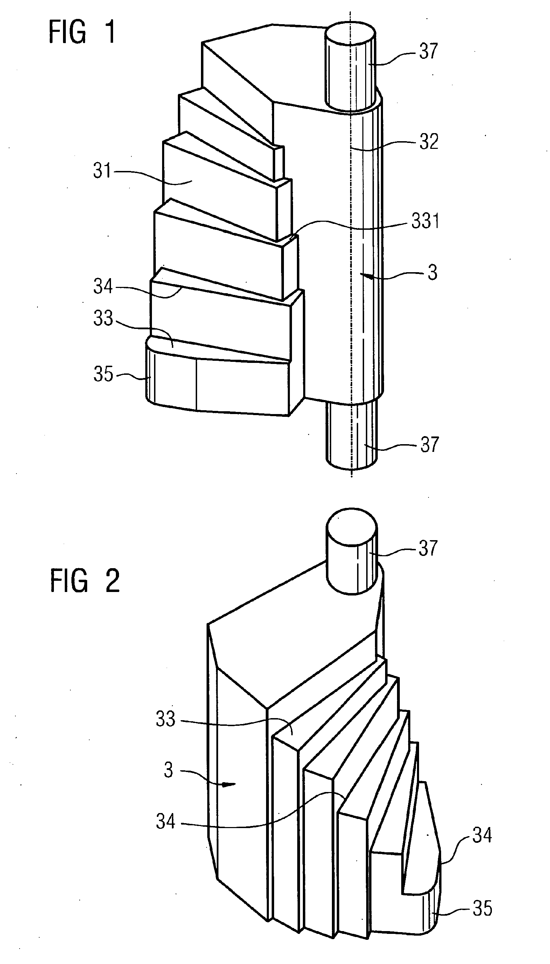

FIG 1 zeigt das Stufenteil 3 in einer perspektivischen Ansicht im Wesentlichen von vorn. Fluchtend zueinander angeordnete Drehzapfen 37 bilden dabei die in FIG 1 angedeutete Drehachse 32 des Stufenteils 3. Spiralförmig beziehungsweise in der Art einer Wendeltreppe sind am Stufenteil 3 einzelne Stufen 31 angeordnet. Jede dieser Stufen 31 weist an ihrer Oberseite jeweils eine Stufenabsatzfläche 33 auf. Die Stufenabsatzfläche 33 wird in ihrer Tiefe durch Begrenzungskanten 34 begrenzt. Durch die wendeltreppenartige Anordnung der Stufen 31 am Stufenteil 3 ergibt sich ein jeweils geringer Versatz einer jeden Stufe 31 zur benachbarten Stufe derart, dass sich am seitlichen Ende einer Stufe 31, welche der Drehachse 32 des Stufenteils 3 zugewandt ist, ein Teilbereich 331 der Stufenabsatzfläche herausbildet.

In FIG 2 ist dargestellt, wie dieser seitliche Versatz der einzelnen Stufen 31 auf der der Drehachse 32 beziehungsweise den Drehzapfen 37 gegenüberliegenden Seite des Stufenteils 3 ebenfalls eine Abstufung der Außenkontur des Stufenteils 3 bewirkt.

An der untersten Stufe des in FIG 2 dargestellten Stufenteils 3 ist deutlich ein abgerundeter Bereich 35 ersichtlich. Des Weiteren weist die unterste Stufe des Stufenteils 3 in einem Teilbereich zwei parallele Begrenzungskanten 34 auf.

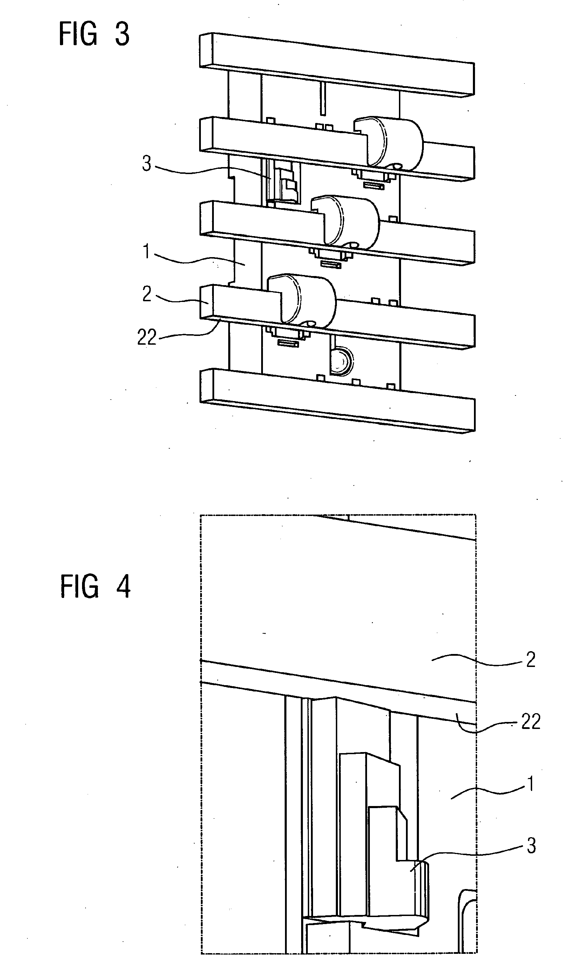

In FIG 3 ist die erfindungsgemäße Verriegelungseinrichtung beim Einsatz an einer Stromschiene 2 dargestellt. Im Adapter 1 ist das Stufenteil 3 angeordnet. Bei der Aufhängung des Adapters 1 auf Stromschienen 2 liegt der Adapter an der Kontaktfläche der Stromschiene 2 an. Entsprechend der Breite der Kontaktfläche der Stromschiene 2 drückt diese eine Stufe des Stufenteils 3 in den Adapter so weit ein, dass die Anlagefläche der Stufe, welche an der Kontaktfläche der Stromschiene anliegt, in einer Ebene mit der restlichen Anlagefläche des Adapters 1 an der Stromschiene 2 liegt. Die Stufenabsatzfläche der zur eingedrückten Stufe benachbarten Stufe, - also der Stufe, die weiter als die Stufe aus dem Stufenteil heraussteht, an der die Stromschiene anliegt -, liegt dabei an der Unterseite 22 der Stromschiene 2 an. Eine Relativbewegung des Adapters 1 in senkrechter Richtung in Bezug auf die Stromschienen 2 wird dadurch verhindert.

In FIG 4 ist dieser Verriegelungszustand durch ein aus dem Adapter 1 herausgeschwenktes Stufenteil 3, welches an der Unterseite 22 der Stromschiene anliegt, bewirkt.

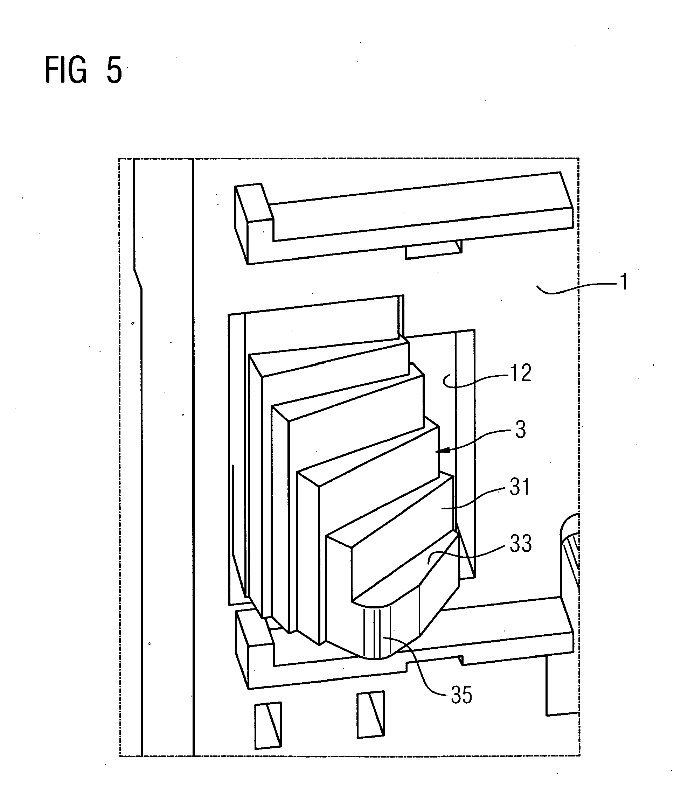

FIG 5 zeigt das erfindungsgemäße Stufenteil 3, welches in einer Aussparung 12 im Adapter 1 angeordnet ist. In dieser Position ist das Stufenteil 3 zur Anlage an die Kontaktfläche der Stromschiene 2 eingerichtet. Es ist ersichtlich, dass sich die Stromschiene 2 mit ihrer Kontaktfläche an die Stufe 31 des Stufenteils 3 anlegen wird, die an die Stufenabsatzfläche grenzt, deren Abstand zur Hakenauflagefläche im Adapter genauso groß oder größer als die Breite der Kontaktfläche der Stromschiene ist. Um übermäßige Reibkräfte beziehungsweise Verschleiß an der Kontaktfläche der Stromschiene 2 sowie am Stufenteil 3 zu vermindern, ist an der untersten Stufe des Stufenteils 3 ein abgerundeter Bereich 35 vorgesehen. Beim Aufschieben des Adapters 1 auf die Stromschiene 2 und beim Eindrücken beziehungsweise Einschwenken des Stufenteils 3 in die Aussparung 12 im Adapter 1 kann somit das Stufenteil 3 mit seinem abgerundeten Bereich 35 leichter auf der Kontaktfläche der Stromschiene 2 gleiten.

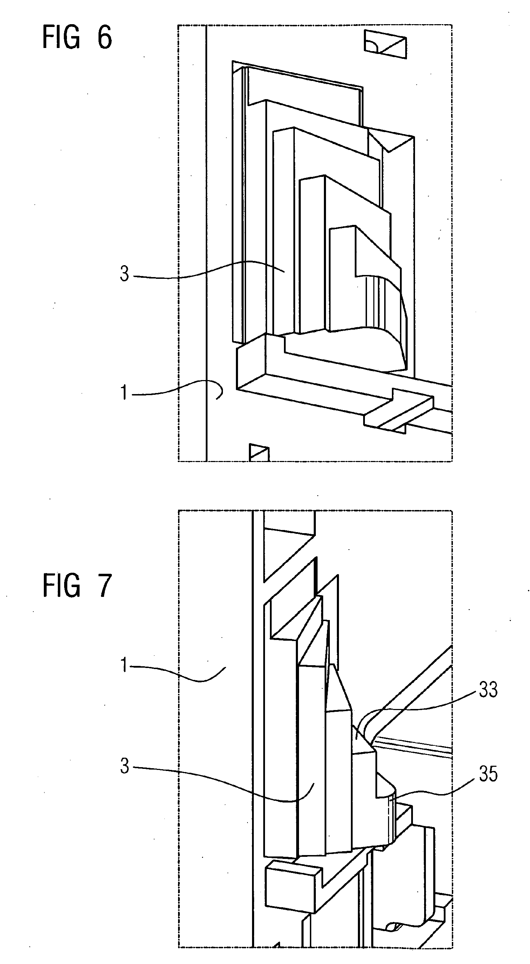

Die FIG 6 und 7 zeigen zur besseren Verdeutlichung der Anordnung des Stufenteils 3 im Adapter 1 diese Teile in unterschiedlichen perspektivischen Ansichten.

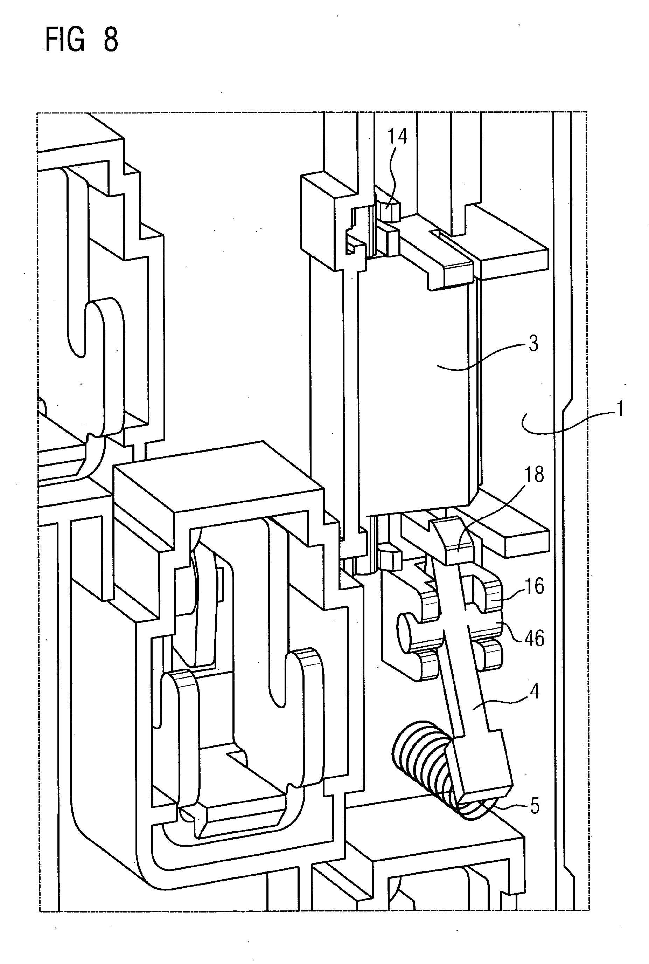

In den FIG 8 bis 10 ist die Rückseite des Adapters 1 mit daran angeordnetem Stufenteil 3 sowie Kipphebel 4 dargestellt.

FIG 8 zeigt den Kipphebel 4 in einer Position, die einer maximal herausgeschwenkten Position des Stufenteils 3 aus dem Adapter 1 entspricht. Zwischen einem Ende des Kipphebels 4 und dem Adapter 1 ist eine Spiral-Druckfeder 5 angeordnet. Diese Spiral-Druckfeder 5 bewirkt eine Kraft auf das Ende des Kipphebels 4, worauf dieser sich um seine die Drehachse 42 definierenden Drehzapfen 46 in einem Einrastelement 16, welches am Adapter 1 fest angeordnet ist, schwenkt. Dadurch, dass das andere Ende des Kipphebels 4 am Stufenteil 3 angreift, bewirkt der Kipphebel 4 ein Schwenken des Stufenteils 3 um seine durch die Drehzapfen 37 am Stufenteil 3 definierte Drehachse 32.

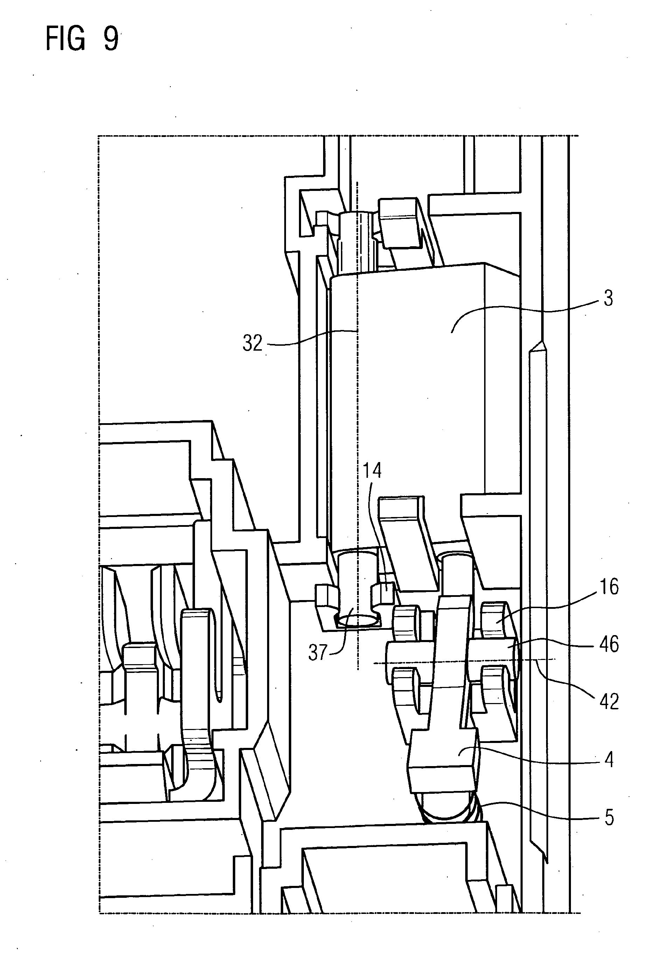

In FIG 9 ist diese Position des Kipphebels 4 beziehungsweise des Stufenteils 3 in einer anderen perspektivischen Ansicht dargestellt. Es sind hier insbesondere die Drehachsen 32 und 42 des Stufenteils 3 beziehungsweise des Kipphebels 4 dargestellt, die durch die Anordnung der jeweiligen Drehzapfen 37 am Stufenteil 3 beziehungsweise Drehzapfen 46 am Kipphebel 4 definiert sind. Um diese Drehachsen 32 beziehungsweise 42 lassen sich das Stufenteil 3 beziehungsweise der Kipphebel 4 auf einer definierten Bahn verschwenken. Die Fixierung des Kipphebels 4 und des Stufenteils 3 in ihrer Position und die Verdrehbarkeit des Kipphebels 4 und des Stufenteils 3 wird dabei durch am Adapter 1 fest angeordnete Einrastelemente 14 für das Stufenteil 3 beziehungsweise Einrastelemente 16 für den Kipphebel 4 gewährleistet.

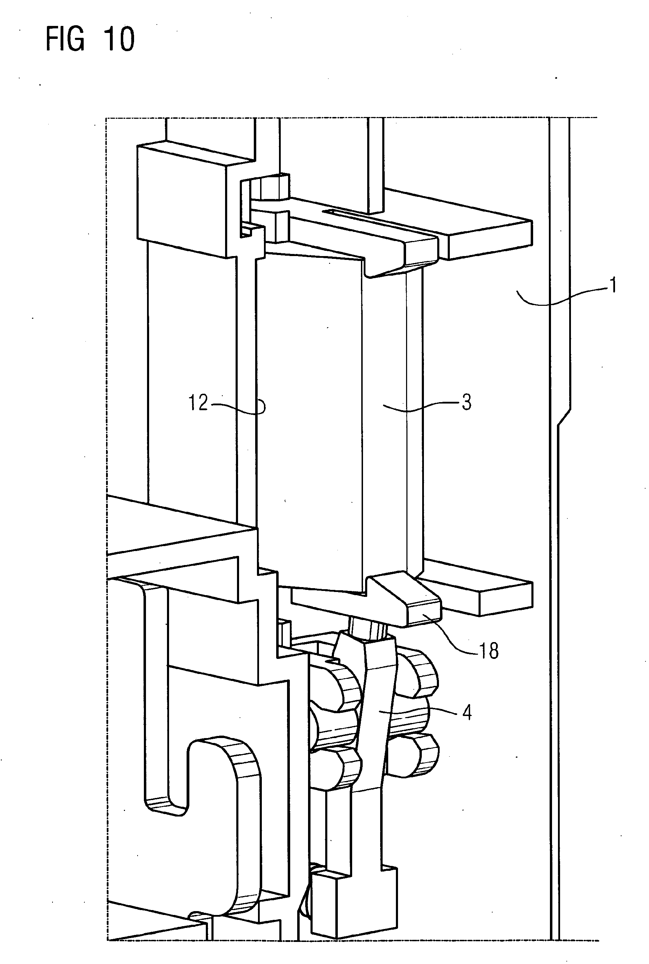

FIG 10 zeigt einen Ausschnitt aus der Rückseite des Adapters 1, in dem der Kipphebel 4 und dementsprechend das Stufenteil 3 in einer Position angeordnet sind, die der Anlage der Kontaktfläche der Stromschiene 2 am Adapter 1 entspricht. In dieser Position ist das Stufenteil 3 in die Aussparung 12 im Adapter 1 hineingeschwenkt. Durch das Eingreifen des Kipphebels 4 in eine Ausnehmung 36 im Stufenteil 3 wird durch die Verschwenkung des Stufenteils 3 ebenfalls der Kipphebel 4 entgegen der Federkraft geschwenkt. Zur Drehbewegungsbegrenzung des Stufenteils 3 am Adapter 1 sind an diesem Anschlagselemente 18, welche an der Rückseite des Stufenteils 3 anliegen, fest angeordnet.

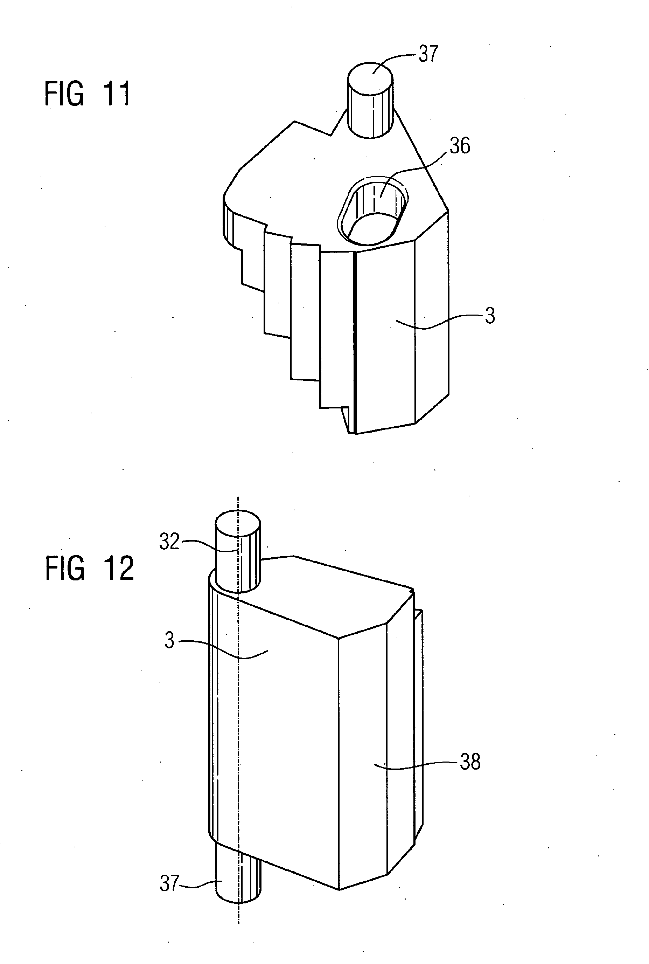

In FIG 11 ist deutlich die im Stufenteil 3 vorgesehene Ausnehmung 36, in die eine am Kipphebel 4 angeordnete Kugel 48 eingreift, dargestellt.

FIG 12 zeigt das Stufenteil 3 in einer perspektivischen Ansicht, in der deutlich eine schräge Fläche an der Rückseite des Stufenteils 3 erkennbar ist. Diese Abschrägung beziehungsweise schräge Fläche 38 ist dafür vorgesehen, dass bei einer Drehbewegung des Stufenteils 3 um eine durch die fluchtend angeordneten Drehzapfen 37 verlaufende Drehachse 32 eine Kollision mit der das Stufenteil 3 konturnah umgebenden Wand der Aussparung 12 im Adapter 1 vermieden wird.

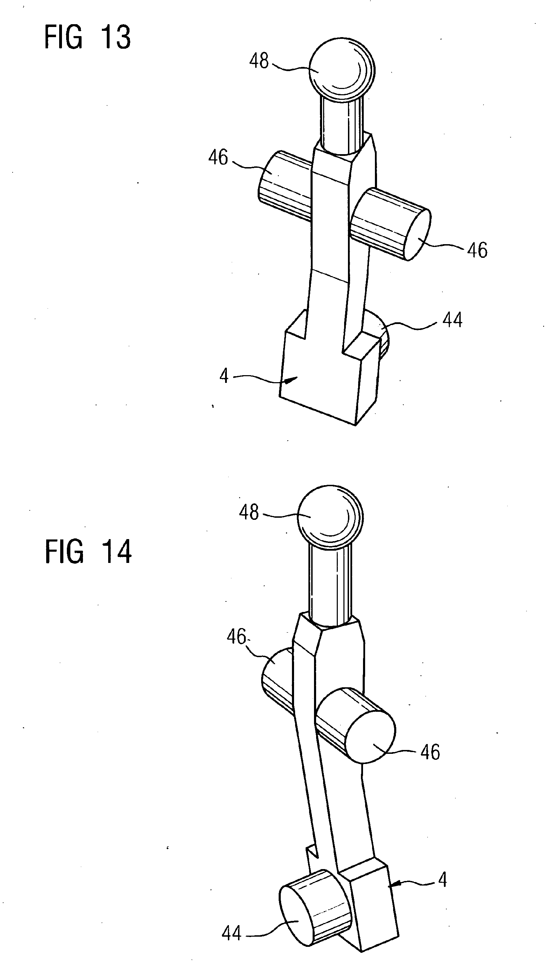

In den FIG 13 und 14 ist der Kipphebel 4 in unterschiedlichen perspektivischen Ansichten dargestellt. Es ist dabei ersichtlich, dass der Kipphebel 4 an einem Ende eine Kugel 48 zum Eingreifen in die Ausnehmung 36 am Stufenteil aufweist. Am anderen Ende umfasst der Kipphebel 4 eine Aufnahmeeinrichtung 44 zur Aufnahme einer Spiral-Druckfeder. Zwischen den beiden Enden des Kipphebels 4 befinden sich beidseitig angebrachte Drehzapfen 46. Diese fluchtend angeordneten Drehzapfen 46 definieren zusammen mit den Einrasteinrichtungen 16 am Adapter 1 die Dreheinrichtung für den Kipphebel 4. Die Aufnahmeeinrichtung 44 am Kipphebel 4 ist in der dargestellten Ausführungsform im Wesentlichen ein Vollzylinder, auf den eine herkömmliche Spiral-Druckfeder aufgesetzt werden kann. Die Enden der Spiral-Druckfeder können sich dabei an dem an der zylinderförmigen Aufnahmeeinrichtung anschließenden Absatz abstützten.

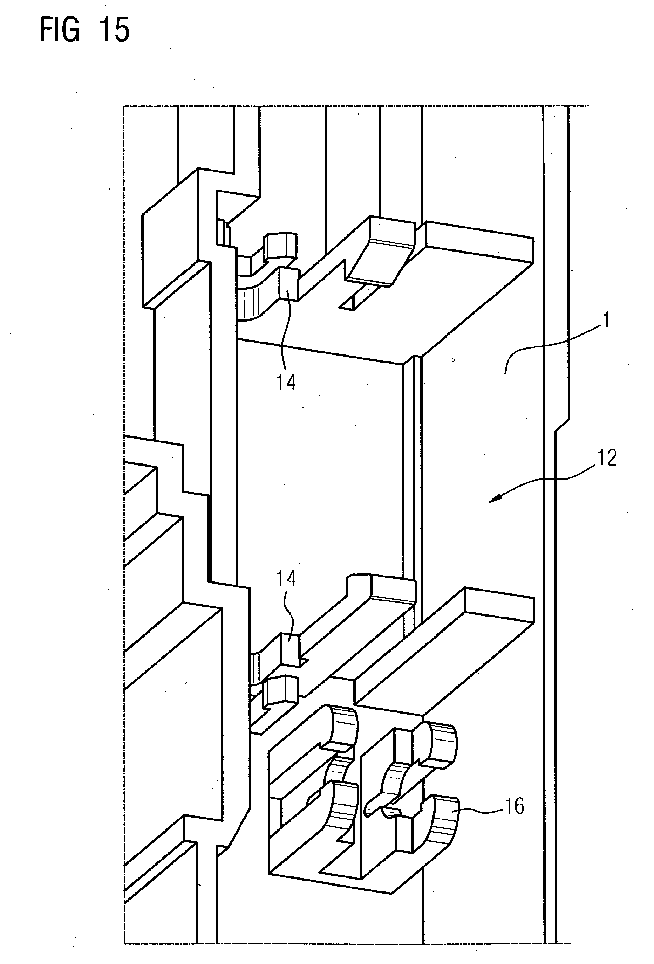

In FIG 15 ist perspektivisch ein Ausschnitt aus dem Adapter 1 dargestellt, an dem die Einrastelemente 14 für das Stufenteil 3 sowie die Einrastelemente 16 für den Kipphebel angedeutet sind. Deutlich ersichtlich ist des Weiteren die Aussparung 12, durch die das Stufenteil im Adapter 1 hinaus- beziehungsweise hineingeschwenkt werden kann.

## Patentansprüche

1. Verriegelungseinrichtung zur Verriegelung der Anordnung eines Adapters zur Befestigung eines elektrischen Gerätes auf mindestens einer Stromschiene, mit einem um eine Drehachse aus dem Adapter herausschwenkbaren Stufenteil (3), welches treppenartig angeordnete Stufen (31) mit Stufenabsatzflächen zur verriegelnden Anlage an einer Unterseite der Stromschiene umfasst, **dadurch gekennzeichnet, dass** die Drehachse (32) des Stufenteils senkrecht zu den Stufenabsatzflächen (33) verläuft und dass die Stufenabsatzflächen (33) einen Ausschnitt aus einer abgestuften Spirale ergeben.

2. Verriegelungsvorrichtung nach Anspruch 1, **dadurch gekennzeichnet, dass** alle Stufenabsatzflächen (33) zur verriegelnden Anlage an einer Stromschiene (2) parallel zueinander verlaufen.

3. Verriegelungseinrichtung nach einem der vorhergehenden Ansprüche, **dadurch gekennzeichnet, dass** die Drehachse (32) an einem seitlichen Rand des Stufenteils (3) angeordnet ist.

4. Verriegelungseinrichtung nach Anspruch 3, **dadurch gekennzeichnet, dass** die Stufenabsatzflächen (33) an der der Drehachse (32) abgewandten Seite eine größere Tiefe aufweisen als an der der Drehachse (32) zugewandten Seite.

5. Verriegelungseinrichtung nach einem der vorhergehenden Ansprüche, **dadurch gekennzeichnet, dass** die Stufen (31) bis auf die unterste Stufe derart versetzt zueinander angeordnet sind, dass eine untere Stufe (31) auf ihrer der Drehachse (32) zugewandten Seite seitlich neben der ihr benachbarten oberen Stufe (31) einen Teilbereich (331) der Stufenabsatzfläche aufweist.

6. Verriegelungseinrichtung nach einem der vorhergehenden Ansprüche, **dadurch gekennzeichnet, dass** die Stufenabsatzfläche (33) der untersten Stufe zumindest einen Abschnitt mit parallelen Begrenzungskanten (34) aufweist.

7. Verriegelungseinrichtung nach einem der vorhergehenden Ansprüche, **dadurch gekennzeichnet, dass** eine seitliche Begrenzungskante (34) der untersten Stufe, die der Drehachse (32) abgewandt ist, abgerundet ist.

8. Verriegelungseinrichtung nach einem der vorhergehenden Ansprüche, **dadurch gekennzeichnet, dass** die Verriegelungseinrichtung des Weiteren einen federkraftbeaufschlagten Kipphebel (4) umfasst, der derart angeordnet ist, dass eines seiner Enden am Stufenteil (3) angreift.

9. Verriegelungseinrichtung nach Anspruch 8, **dadurch gekennzeichnet, dass** die Längsachse des Kipphebels (4) im Wesentlichen parallel zur Drehachse (32) des Stufenteils (3) verläuft.

10. Verriegelungseinrichtung nach einem der Ansprüche 8 bis 9, **dadurch gekennzeichnet, dass** an einem Ende des Kipphebels (4), welches dem am Stufenteil (3) angreifenden Ende gegenüberliegt, eine Aufnahmeeinrichtung (44) für eine Spiral-Druckfeder (5) angeordnet ist und dass die Drehachse (42) des Kippehebels zwischen seinen beiden Enden liegt.

11. Verriegelungseinrichtung nach einem der Ansprüche 8 bis 10, **dadurch gekennzeichnet, dass** das am Stufenteil (3) angreifende Kippehebelende eine Kugel (48) aufweist, welche in eine Ausnehmung (36) im Stufenteil (3) eingreift.

12. Verriegelungseinrichtung nach einem der vorhergehenden Ansprüche, **dadurch gekennzeichnet, dass** das Stufenteil (3) im Adapter (1) drehbar eingerastet ist.

13. Verriegelungseinrichtung nach einem der Ansprüche 8 bis 12, **dadurch gekennzeichnet, dass** der Kipphebel (4) im Adapter (1) drehbar eingerastet ist.

14. Verriegelungseinrichtung nach einem der vorhergehenden Ansprüche, **dadurch gekennzeichnet, dass** am Adapater (1) auf der den Stufen (31) des Stufenteils (3) abgewandten Seite mindestens ein Anschlagselement (18) zur Drehbewegungsbegrenzung des Stufenteils (3) angeordnet ist.

## Claims

1. Locking device for locking the arrangement of an adapter for mounting an electrical device on at least one busbar, having a step part (3) which can be pivoted out of the adapter about a rotation axis and which comprises steps (31) which are arranged in a staircase-like manner and have step shoulder surfaces for locking abutment against a lower face of the busbar, **characterized in that** the rotation axis (32) of the step part runs perpendicular to the step shoulder surfaces (33), and **in that** the step shoulder surfaces (33) produce a cutout from a stepped spiral.

2. Locking device according to Claim 1, **characterized in that** all step shoulder surfaces (33) for locking abutment against a busbar (2) run parallel to one another.

3. Locking device according to either of the preceding claims, **characterized in that** the rotation axis (32) is arranged at a lateral edge of the step part (3).

4. Locking device according to Claim 3, **characterized in that** the step shoulder surfaces (33) on that side which is averted from the rotation axis (32) have a greater depth than on that side which faces the rotation axis (32).

5. Locking device according to one of the preceding claims, **characterized in that** the steps (31), apart from the lowermost step, are arranged offset in relation to one another in such a way that a lower step (31) has, on its side which faces the rotation axis (32), a subregion (331) of the step shoulder surface laterally next to the upper step (31) which is adjacent to it.

6. Locking device according to one of the preceding claims, **characterized in that** the step shoulder surface (33) of the lowermost step has at least one section with parallel boundary edges (34).

7. Locking device according to one of the preceding claims, **characterized in that** a lateral boundary edge (34) of the lowermost step, which lateral boundary edge is averted from the rotation axis (32), is rounded.

8. Locking device according to one of the preceding claims, **characterized in that** the locking device also comprises a tilting lever (4) which is subjected to the action of spring force and which is arranged in such a way that one of its ends acts on the step part (3).

9. Locking device according to Claim 8, **characterized in that** the longitudinal axis of the tilting lever (4) runs substantially parallel to the rotation axis (32) of the step part (3).

10. Locking device according to either of Claims 8 and 9, **characterized in that** a holding device (44) for a helical compression spring (5) is arranged at an end of the tilting lever (4) which is situated opposite that end which acts on the step part (3), and **in that** the rotation axis (42) of the tilting lever is situated between its two ends.

11. Locking device according to one of Claims 8 to 10, **characterized in that** the tilting lever end which acts on the step part (3) has a ball (48) which engages in a recess (36) in the step part (3).

12. Locking device according to one of the preceding claims, **characterized in that** the step part (3) is latched into the adapter (1) in a rotatable manner.

13. Locking device according to one of Claims 8 to 12, **characterized in that** the tilting lever (4) is latched into the adapter (1) in a rotatable manner.

14. Locking device according to one of the preceding claims, **characterized in that** at least one stop element (18) for limiting the rotary movement of the step part (3) is arranged on the adapter (1) on that side which is averted from the steps (31) of the step part (3).

## Revendications

1. Dispositif de verrouillage pour le verrouillage de l'agencement d'un adaptateur pour la fixation d'un appareil électrique sur au moins un rail conducteur, comprenant une partie (3) à paliers pouvant pivoter hors de l'adaptateur autour d'un axe de rotation et comprenant des paliers (31) disposés en escalier ayant des marches pour l'application en verrouillage à un côté inférieur du rail conducteur, **caractérisé en ce que** l'axe (32) de rotation de la partie à paliers est perpendiculaire aux marches (33) et **en ce que** les marches (33) donnent une partie d'une spirale étagée.

2. Dispositif de verrouillage suivant la revendication 1, **caractérisé en ce que** toutes les marches (33) pour l'application en verrouillage à un rail (2) conducteur sont parallèles entre elles.

3. Dispositif de verrouillage suivant l'une des revendications précédentes, **caractérisé en ce que** l'axe (32) de rotation est disposé sur un bord latéral de la partie (3) à paliers.

4. Dispositif de verrouillage suivant la revendication 3, **caractérisé en ce que** les marches (33) ont, du côté éloigné de l'axe (32) de rotation, une profondeur plus grande que du côté tourné vers l'axe (32) de rotation.

5. Dispositif de verrouillage suivant l'une des revendications précédentes, **caractérisé en ce que** les paliers (31) sont décalés les uns par rapport aux autres, à l'exception du palier le plus bas, de manière à ce qu'un palier (31) inférieur ait, du côté tourné vers l'axe (32) de rotation, une zone (331) partielle de la marche, latéralement à côté de son palier (31) supérieur voisin.

6. Dispositif de verrouillage suivant l'une des revendications précédentes, **caractérisé en ce que** les marches (33) du palier le plus bas ont au moins une partie ayant des bords (34) de démarcation parallèles.

7. Dispositif de verrouillage suivant l'une des revendications précédentes, **caractérisé en ce qu'**un bord (34) de démarcation du palier le plus bas, qui est éloigné de l'axe (32) de rotation, est arrondi.

8. Dispositif de verrouillage suivant l'une des revendications précédentes, **caractérisé en ce que** le dispositif de verrouillage comprend en outre un levier (4) de basculement, qui est soumis à la force d'un ressort et qui est disposé de manière à ce que l'une de ses extrémités attaque la partie (3) à paliers.

9. Dispositif de verrouillage suivant la revendication 8, **caractérisé en ce que** l'axe longitudinal du levier (4) de basculement est sensiblement parallèle à l'axe (32) de rotation de la partie (3) à paliers.

10. Dispositif de verrouillage suivant l'une des revendications 8 à 9, **caractérisé en ce qu'**à une extrémité du levier (4) de basculement, qui est opposée à l'extrémité attaquant la partie (3) à paliers, est disposé un dispositif (44) de réception d'un ressort (5) spirale de compression et **en ce que** l'axe (42) de rotation du levier de basculement se trouve entre ses deux extrémités.

11. Dispositif de verrouillage suivant l'une des revendications 8 à 10, **caractérisé en ce que** l'extrémité du levier de basculement attaquant la partie (3) à paliers comporte une bille (48), qui pénètre dans un évidement (36) de la partie (3) à paliers.

12. Dispositif de verrouillage suivant l'une des revendications précédentes, **caractérisé en ce que** la partie (3) à palier est encliquetée dans l'adaptateur (1), de manière à pouvoir tourner.

13. Dispositif de verrouillage suivant l'une des revendications 8 à 12, **caractérisé en ce que** le levier (4) de basculement est encliqueté dans l'adaptateur (1), de manière à pouvoir tourner.

14. Dispositif de verrouillage suivant l'une des revendications précédentes, **caractérisé en ce qu'**au moins un élément (18) de butée est monté, pour la limitation du mouvement de rotation de la partie (3) à paliers, sur l'adaptateur (1) du côté éloigné des paliers (31) de la partie (3) à paliers.
